# EUROPÄISCHE PATENTANMELDUNG

(11) **EP 1 028 264 A2**
(43) Veröffentlichungstag der Anmeldung: **16.08.2000**
(21) Anmeldenummer: 00101219.4
(22) Anmeldetag: 21.01.2000
(51) Int. Cl.: F16D 25/08, F16D 48/02

(54) **Kupplungsbetätigungsvorrichtung**

(30) Priorität: 12.02.1999 DE 19905964
(71) Anmelder: Volkswagen Aktiengesellschaft, 38436 Wolfsburg (DE)
(72) Erfinder: Schneider, Arthur, Ing., 38112 Braunschweig (DE); Herbst, Carsten, Dipl.-Ing., 38104 Braunschweig (DE)

(57) **Zusammenfassung**

Es ist eine Vorrichtung zur Betätigung einer aktiven Reibungskupplung (14) eines mit einem Schaltgetriebe versehenen Kraftfahrzeuges mit einem Betätigungshebel (3) und einer Krafterzeugungseinheit (2) vorgesehen, wobei die Krafterzeugungseinheit (2) den Betätigungshebel (3) mit einer veränderlichen Kraft zur Erzeugung eines veränderlichen Kupplungsmomentes beaufschlagt.

## Beschreibung

Die vorliegende Erfindung betrifft eine Vorrichtung zur Betätigung einer aktiven Reibungskupplung eines mit einem Schaltgetriebe versehenen Kraftfahrzeugs nach dem Oberbegriff des Anspruchs 1.

Bekannte Kraftfahrzeuge weisen oftmals ein von Hand betätigtes mehrgängiges Schaltgetriebe auf, welches über die Reibungskupplung mit dem Motor zur Momentenübertragung verbunden werden kann. Über die Reibungskupplung wird der Kraftfluß von einem Schwungrad und einer Kupplungsdruckplatte über eine Kupplungsscheibe an die Getriebeeingangswelle weitergeleitet.

Bekannte Reibungskupplungen sind dabei oftmals als sogenannte Tellerfederkupplungen ausgebildet, bei denen die Tellerfedern für die Erzeugung einer Anpreßkraft sorgen, die die Kupplungsscheibe mit dem Schwungrad kraftschlüssig verbindet.

Zur Vereinfachung des Aufbaus von Reibungskupplungen sind auch bereits aktive Reibungskupplungen bekannt geworden, die ohne diese Tellerfedern arbeiten. Aufgrund des Fehlens der Tellerfedern muß die Anpreßkraft bei diesen aktiven Reibungskupplungen anderweitig erzeugt werden. Zu diesem Zweck besitzen solche aktiven Reibungskupplungen einen Betätigungshebel, der über eine Krafterzeugungseinheit angesteuert die Reibungskupplung in den Zustand "aktiv zugedrückt" bringen kann.

Eine solche aktiv zugedrückte Reibungskupplung benötigt daher eine Krafterzeugungseinheit, die den Betätigungshebel beaufschlagt.

Das von der Reibungskupplung zu übertragende Moment, das Kupplungsmoment, unterscheidet sich im Falle eines möglichst ruckfrei ablaufenden Anfahrvorgangs des mit der Reibungskupplung ausgerüsteten Kraftfahrzeuges von dem Kupplungsmoment bei einer Fahrt des Kraftfahrzeuges mit vollem Motormoment.

Als Krafterzeugungseinheit kann eine Kolben/Zylindereinheit zum Einsatz kommen, die über einen Betriebsdruck beaufschlagt den Betätigungshebel zum Zudrücken der Kupplung beaufschlagt. Die Reibungskupplung muß aufgrund der unterschiedlichen Motormomente einerseits dosiert mit einer Zuhaltekraft beaufschlagt werden können und andererseits aber bei beispielsweise einem Momentensprung auch schnell beaufschlagt werden können.

Der Erfindung liegt daher die Aufgabe zugrunde, eine Vorrichtung zur Betätigung einer aktiven Reibungskupplung eines mit einem Schaltgetriebe versehenen Kraftfahrzeuges zu schaffen, die den während des Betriebs des Kraftfahrzeugs veränderlichen Gegebenheiten Rechnung trägt. Darüber hinaus soll die zu schaffende Kupplungsbetätigungsvorrichtung einen einfachen Aufbau aufweisen.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Erfindungsgemäß ist daher eine Vorrichtung zur Betätigung einer aktiven Reibungskupplung eines mit einem Schaltgetriebe versehenen Kraftfahrzeugs mit einem Betätigungshebel und einer Krafterzeugungseinheit vorgesehen, wobei die Krafterzeugungseinheit den Betätigungshebel mit einer veränderlichen Kraft zur Erzeugung eines veränderlichen Kupplungsmoments beaufschlagt. Die vorgesehene Krafterzeugungseinheit ist dabei nach der Erfindung in vorteilhafter Weise von einer hydraulisch beaufschlagten Kolben/Zylindereinheit mit einer Kolbenstange gebildet, die an den Betätigungshebel über ein zwischengeschaltetes elastisches Bauteil gekoppelt ist.

Die Kolben/Zylindereinheit nach der Erfindung kann dabei über eine getaktete Ventileinrichtung mit Druckfluid beaufschlagt werden. Die Zahl der Taktzyklen bestimmt dabei die Menge an Druckfluid, die der Kolben/Zylindereinheit zugeführt wird.

Die getaktete Ventileinrichtung wird dabei von einer Steuereinrichtung so angesteuert, daß ein Ventilkörper der Ventileinrichtung eine Durchflußöffnung für eine bestimmte Zeitdauer öffnet, über die dann ein Druckfluid in den Zylinder einströmt. Über eine Steuerung der Zeitdauer der Öffnung der Durchflußöffnung und/oder eine Steuerung der Zahl der Öffnungszyklen kann ein gewünschtes Kupplungsmoment genau angesteuert werden.

Die sich hieraus ergebende Verschiebung des Kolbens führt zu einer kraftmäßigen Beaufschlagung des Betätigungshebels und zwar über das zwischengeschaltete elastische Bauteil. Dieses elastische Bauteil kann dabei eine Druckfeder mit einer nichtlinearen Federkennlinie sein, so daß der Kolbenweg des Kolbens zu einer nichtlinearen Bewegung des Betätigungshebels führt und damit zu einem nichtlinearen Kupplungsweg. Der geschilderte nichtlineare Zusammenhang zwischen dem Kolbenweg und der Wegstrecke des Anlenkungspunktes der Kolbenstange am Betätigungshebel ist deshalb von Vorteil, da damit die Notwendigkeit wegfällt, die Ventileinrichtung in nichtlinearer Weise anzusteuern.

Wenn nämlich beispielsweise als Druckfeder eine Kegelfeder mit einer progressiv steigenden Federkennlinie zum Einsatz kommt, dann führt eine lineare Kolbenwegstrecke des Kolbens zu einer progressiv ansteigenden Wegstrecke des Betätigungshebels und damit zu einem progressiv ansteigenden Kupplungsweg und damit zu einem dementsprechend progressiv ansteigenden Kupplungsmoment. Es ist damit möglich, durch eine geringere Zahl an Ansteuerungszyklen der Ventileinrichtung das Kupplungsmoment bei einem Anfahrvorgang, bei dem die Kupplung nicht schlagartig geschlossen werden soll, nur geringfügig zu erhöhen und bei einem hohen Motormoment oder einem Momentenstoß, dem ein hohes Kupplungsmoment folgen muß, die Zahl der Ventiltakte zu erhöhen, wodurch aufgrund der progressiven Federkennlinie die Zuhaltekraft progressiv und damit schnell ansteigt, so daß ein Durchrutschen der Kupplung vermieden werden kann und aber gleichzeitig eine hohe Dosierbarkeit der Kupplung gegeben ist.

Wenn die aktive Reibungskupplung zur Kraftübertragung über den Betätigungshebel zugedrückt wird, wird der Kolben durch das Aufbringen eines Hydraulikdrucks bewegt. Dies führt auch dazu, daß die Kolbenstange einer entsprechenden Bewegung unterworfen wird und sich durch die progressive Federkennlinie der Kegelfeder auch eine Progression für die Kennlinie des Weges am Betätigungshebel über dem Weg am Hydraulikkolben ergibt und sich somit auch eine Progression für das Kupplungsmoment über dem Weg des Hydraulikkolbens einstellt. Auf diese Weise ist es möglich, daß eine bestimmte Menge an zugeführter Hydraulikflüssigkeit bei fast geöffneter Kupplung zu einem geringen Kupplungsweg führt und bei einer fast geschlossenen Kupplung ein großer Kupplungsweg realisiert wird, womit ein dosiertes Anfahren bei der Betätigung der Reibungskupplung als Anfahrkupplung ermöglicht wird und auch ein dosiertes Einleiten einer Schaltung im Falle der Betätigung als Schaltkupplung möglich ist.

Wenn sich die Reibungskupplung in einem geöffneten oder fast vollständig geöffneten Zustand befindet, dann führt die Zufuhr einer bestimmten Menge an Hydraulikflüssigkeit in die Kolben/Zylindereinheit zu einem kleinen Kupplungsweg. Mit der bestimmten Menge an zugeführter Druckflüssigkeit läßt sich bei einer fast schon geschlossenen Kupplung ein großer Kupplungsweg realisieren und zwar entsprechend der progressiv steigenden Federkennlinie der Kegelfeder.

Die Erfindung wird im folgenden anhand der Zeichnung näher erläutert. Diese zeigt in:
Fig. 1 in einer schematischen Darstellung eine Kupplungsbetätigungsvorrichtung nach der Erfindung;
Fig. 2 eine Kennlinie des Kupplungswegs aufgetragen über dem Kolbenweg; und
Fig. 3 eine schematische Darstellung einer Betätigungsvorrichtung nach der Erfindung an einer aktiven Kupplung.

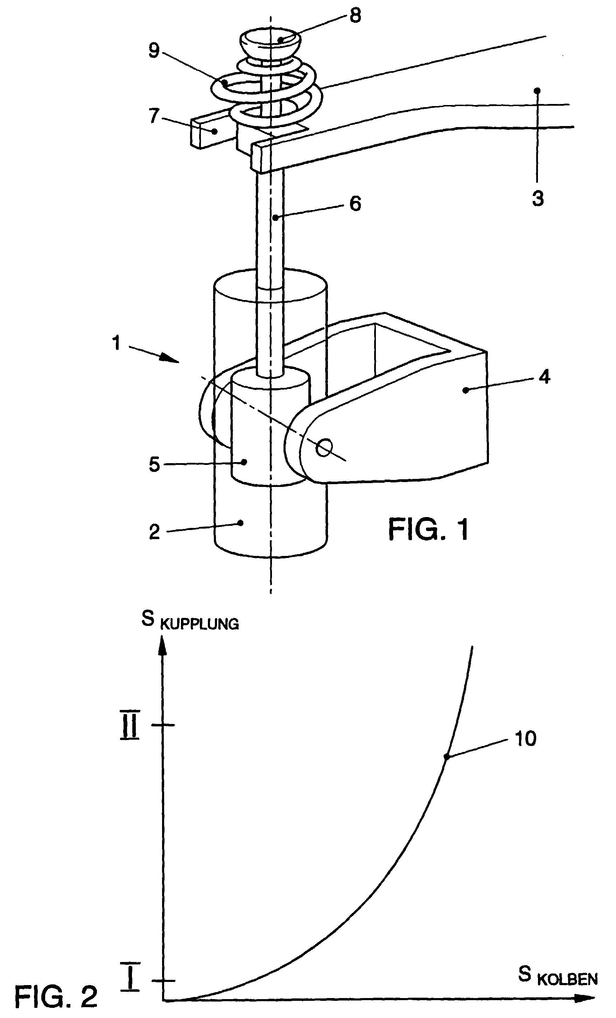

Fig. 1 der Zeichnung zeigt in schematischer Weise eine Kupplungsbetätigungsvorrichtung 1 nach der Erfindung. In der dargestellten Ausführungsform weist die Kupplungsbetätigungsvorrichtung 1 eine Kolben/Zylindereinheit 2 auf, die zur Erzeugung der Kraft zur Betätigung eines Betätigungshebels 3 dient.

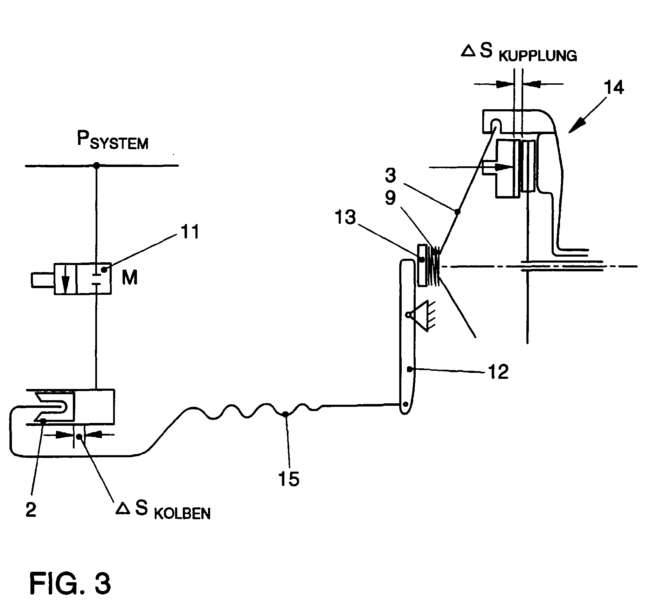

Der Betätigungshebel 3 dient dabei zum aktiven Zudrücken einer in Fig. 3 schematisch dargestellten aktiven Reibungskupplung eines mit einem Schaltgetriebe ausgestatteten Kraftfahrzeugs. Unter dem Begriff des aktiven Zudrückens wird dabei ein kraftschlüssiges Andrücken der Kupplungsscheibe der Reibungskupplung an die Schwungscheibe verstanden. In der dargestellten Ausführungsform ist die Kolben/Zylindereinheit 2 an einer Schwenkaufnahme 4 verschwenkbar angelenkt, die am Gehäuse des Schaltgetriebes festliegt.

Die Kolben/Zylindereinheit 2 besitzt einen Kolben 5, an dem eine Kolbenstange 6 starr festgelegt ist, die eine Aufnahme 7 des Betätigungshebels 3 durchsetzt. Am Ende der Kolbenstange 6 befindet sich eine Erweiterung 8 angeordnet, die der Fixierung einer Kegelfeder 9 zwischen der Erweiterung 8 und der Oberseite des Betätigungshebels 3 dient.

Wenn nun der Zylinderraum oberhalb des Kolbens 5 mit einem Druckfluid beaufschlagt wird, dann führt dies zu einer Bewegung des Kolbens 5 in der Zeichnungsebene nach unten gerichtet um eine bestimmte Wegstrecke. Diese Bewegung führt auch zu einer entsprechenden Verlagerung der Erweiterung 8 und zu einer Beaufschlagung der Kegelfeder 9.

Aufgrund der progressiven Federkennlinie der Kegelfeder 9 führt diese Verlagerung des Kolbens 5 (S_{KOLBEN}) im geöffneten Zustand der Kupplung, die in Fig. 2 mit dem Bezugszeichen I versehen ist, zu einem bestimmten Kupplungsweg (S_{KUPPLUNG}). Der Kupplungsweg 10 zeigt bei einer weiteren Zufuhr von Hydrauliköl und einer entsprechenden Verlagerung des Kolbens 5 den in Fig. 2 mit dem Bezugszeichen 10 bezeichneten progressiven Kennlinienverlauf, wobei in Fig. 2 der Zeichnung ein parabolischer Kennlinienverlauf gewählt wurde. In dem mit II bezeichneten geschlossenen Zustand der Kupplung führt daher eine entsprechende weitere Beaufschlagung des Kolbens 5 mit Druckfluid zu einem progressiven Anstieg des Kupplungswegs und damit zu einem progressiv ansteigenden Kupplungsmoment.

Die Kolbenstange 6 ist in der dargestellten Ausführungsform eine Zugstange, die im wesentlichen keine Längenelastizität aufweist, deren eines Ende über eine Kegelfeder 9 mit dem Betätigungshebel 3 verbunden ist. Das andere Ende der Kolbenstange 6 ist starr mit dem Hydraulikkolben 5 verbunden. Am Hydraulikkolben 5 und der Kolbenstange 6 befindet sich jeweils eine Dichtung für den Druckraum im Hydraulikzylinder angeordnet und die Kolben/Zylindereinheit 2 ist über die Schwenkaufnahme 4 am Getriebegehäuse schwenkbar angeordnet. Über einen nicht näher dargestellten Faltenbalg kann der Zylinderinnenraum vor dem Eindringen von Schmutz geschützt werden. Zum aktiven Einrücken der Kupplung wird der Kolben 5 durch das Aufbringen eines Hydraulikdrucks bewegt, wodurch auch die Kolbenstange 6 eine entsprechende Bewegung erfährt. Aufgrund der progressiven Federkennlinie der Kegelfeder 9 wird hierdurch auch eine Progression der Kennlinie des Weges des Betätigungshebels 3 über dem Weg am Hydraulikkolben 5 erreicht und somit auch eine Progression des Kupplungsmoments über dem Weg am Hydraulikkolben. Mit einer bestimmten Menge Hydraulikfluid kann daher bei einer fast geöffneten Kupplung (I) ein geringer Kupplungsweg erreicht werden und bei einer fast geschlossenen Kupplung (II) ein großer Kupplungsweg realisiert werden, womit ein dosiertes Anfahren bei der Betätigung der Kupplung als Anfahrkupplung und ein dosiertes Einleiten eines Schaltvorgangs bei der Betätigung der Kupplung als Schaltkupplung erreicht werden.

Durch die im dargestellten Ausführungsbeispiel gewählte progressiv steigende Kennlinie in der Form einer parabelförmigen Kennlinie der Kegelfeder kann der in Fig. 2 gezeigte parabelförmige Verlauf des Kupplungsweges über dem Kolbenweg erreicht werden, wodurch einerseits eine hohe Dosierbarkeit des Kupplungsmomentes und andererseits ein schnelles Schließen und Zudrücken der Kupplung zur Momentenübertragung erreicht werden kann. Auch andere Kennlinienverläufe, wie beispielsweise ein logarithmischer oder exponentieller Verlauf sind möglich. Dieser hat den Vorteil, daß bei einem bereits eingestellten relativ hohen Kupplungsmoment ein kurzer weiterer Kolbenweg S_{Kolben} zu einem großen Kupplungsweg S_{Kupplung} führt und damit zu einem schnellen Aufbau eines hohen Kupplungsmoments, da die Kennlinie hier bereits in einem Punkt starker Steigung vorliegt.

Fig. 3 zeigt eine schematische Darstellung der Funktionsweise der Kupplungsbetätigungsvorrichtung. Die Kolben/Zylindereinheit 2 wird über eine getaktete Ventileinrichtung 11 mit dem Systemdruck P_{System} beaufschlagt. Der Kolben 5 erfährt hierdurch eine Verlagerung S_{Kolben}, die über einen zwischengeschalteten Hebel 12 und eine Druckplatte 13 auf den Betätigungshebel 3 übertragen wird und zwar über die Kegelfeder 9. Auf diese Weise kann der Weg der Kupplung 14 (S_{Kupplung}) den in Fig. 2 gezeigten progressiven Verlauf 10 annehmen und ein progressiv ansteigendes Kupplungsmoment bereitstellen.

Es ist bei einer geringfügig abgewandelten Ausführungsform auch möglich, eine starre Verbindung zwischen der Druckplatte 13 und dem Betätigungshebel 3 zu schaffen, indem die dazwischen angeordnete Kegelfeder 9 weggelassen wird und als zwischengeschaltetes elastisches Bauteil ein auf Zug belastetes elastisches Zugelement 15 vorzusehen, wie es Fig. 3 auch zeigt, so daß die veränderliche Kraft durch eine Belastung dieses Zugelementes 15, also eines zugelastischen Verbindungsgliedes, auf Zug erzeugt wird, die auf den Hebel 12 übertragen wird, mit dem die Druckplatte 3 und der Betätigungshebel 3 beaufschlagt werden und so ein veränderliches Kupplungsmoment erzeugt wird.

Hinsichtlich vorstehend im einzelnen nicht näher erläuterter Merkmale der Erfindung wird im übrigen ausdrücklich auf die Ansprüche und die Zeichnung verwiesen.

### BEZUGSZEICHENLISTE

- 1: Kupplungsbetätigungsvorrichtung
- 2: Kolben/Zylindereinheit
- 3: Betätigungshebel
- 4: Schwenkaufnahme
- 5: Kolben
- 6: Kolbenstange
- 7: Aufnahme
- 8: Erweiterung
- 9: Kegelfeder
- 10: Kupplungsweg
- 11: Ventileinrichtung
- 12: Hebel
- 13: Druckplatte
- 14: Kupplung

## Patentansprüche

1. Vorrichtung zur Betätigung einer aktiven Reibungskupplung (14) eines mit einem Schaltgetriebe versehenen Kraftfahrzeuges mit einem Betätigungshebel (3) und einer Krafterzeugungseinheit (2), dadurch gekennzeichnet, daß die Krafterzeugungseinheit (2) den Betätigungshebel (3) mit einer veränderlichen Kraft zur Erzeugung eines veränderlichen Kupplungsmomentes beaufschlagt.

2. Vorrichtung nach Anspruch 1, dadurch gekennzeichnet, daß die Krafterzeugungseinheit (2) eine hydraulisch beaufschlagte Kolben/Zylindereinheit (2) mit einer Kolbenstange (6) ist, die an den Betätigungshebel (3) über ein zwischengeschaltetes elastisches Bauteil (9) gekoppelt ist.

3. Vorrichtung nach Anspruch 1 oder 2, dadurch gekennzeichnet, daß das elastische Bauteil (9) eine Druckfeder (9) mit einer nichtlinearen Federkennlinie ist derart, daß der Kolbenweg des Kolbens (5) nichtlinear auf den Betätigungshebel (3) übertragen wird.

4. Vorrichtung nach Anspruch 3, dadurch gekennzeichnet, daß die Druckfeder (9) eine Kegelfeder (9) mit einer progressiv steigenden Federkennlinie ist derart, daß eine lineare Kolbenwegstrecke des Kolbens (5) zu einer progressiv ansteigenden Wegstrecke des Betätigungshebels (3) führt.

5. Vorrichtung nach einem der Ansprüche 2 bis 4, dadurch gekennzeichnet, daß die Kolben/Zylindereinheit (2) am Schaltgetriebe über eine Schwenkaufnahme (4) schwenkbar festgelegt ist.

6. Vorrichtung nach einem der Ansprüche 2 bis 5, dadurch gekennzeichnet, daß die Kolben/Zylindereinheit (2) über einen Faltenbalg vor Eintritt von Verunreinigungen geschützt ist.
